# EUROPEAN PATENT APPLICATION

(11) **EP 3 187 532 A1**
(43) Date of publication of application: **05.07.2017**
(21) Application number: 15835455.5
(22) Date of filing: 27.07.2015
(51) Int. Cl.: C08L 21/00, B60C 1/00, C08K 3/04, C08K 3/06, C08K 3/36, C08K 5/151, C08L 9/06, C08L 33/00

(54) **RUBBER COMPOSITION AND PNEUMATIC TIRE**

(30) Priority: 25.08.2014 JP 2014170543
(71) Applicant: Sumitomo Rubber Industries, Ltd., Kobe-shi, Hyogo 651-0072 (JP)
(72) Inventor: MIYAZAKI Tatsuya, Kobe-shi Hyogo 651-0072 (JP)
(74) Representative: Manitz Finsterwald Patentanwälte PartmbB
(86) International application number: PCT/JP2015/071190
(87) International publication number: WO 2016/031460

(57) **Abstract**

Provided is a rubber composition that can improve hysteresis loss to allow for simultaneous improvement in initial grip performance and stable grip performance during mid and late running while ensuring good abrasion resistance. The present invention relates to a rubber composition containing: a rubber component; sulfur; and a specific compound, the rubber composition containing 60% to 100% by mass of a diene rubber based on 100% by mass of the rubber component, the rubber composition containing 0.1 to 30 parts by mass of the specific compound per 100 parts by mass of the rubber component.

## Description

### TECHNICAL FIELD

The present invention relates to a rubber composition and a pneumatic tire including a tread formed from the rubber composition.

### BACKGROUND ART

Rubber for applications requiring grip force needs to have improved hysteresis loss to obtain grip, and also needs to ensure abrasion resistance.

For example, tire treads are desired which have improved hysteresis loss to exhibit excellent handling stability from beginning to end of the run, or in other words, to exhibit excellent initial grip performance while maintaining good grip performance during mid and late running. They are also required to ensure abrasion resistance which usually tends to have a trade-off relationship with grip performance.

Hysteresis loss is known to be improved, for example, by using a combination of magnesium acetate and imidazole (e.g. Patent Literature 1) or increasing filler content. Unfortunately, these methods are insufficient to satisfy the above properties. Another known method is to add a large amount of an acrylic resin or phenolic resin having excellent grip. However, these resins are difficult to uniformly disperse in rubber due to their high polarity. Therefore, sufficient abrasion resistance and sufficient grip performance cannot be simultaneously achieved by this method.

### CITATION LIST

### PATENT LITERATURE

Patent Literature 1: JP 2007-138101 A

### SUMMARY OF INVENTION

### TECHNICAL PROBLEM

The present invention aims to solve the above problems and provide a rubber composition that can improve hysteresis loss to allow for simultaneous improvement in initial grip performance and stable grip performance during mid and late running while ensuring good abrasion resistance.

### SOLUTION TO PROBLEM

The present invention relates to a rubber composition, containing:
a rubber component;
sulfur; and
a compound represented by the formula (1) below,
the rubber component including 60% to 100% by mass of a diene rubber based on 100% by mass of the rubber component,
the compound of formula (1) being present in an amount of 0.1 to 30 parts by mass per 100 parts by mass of the rubber component, 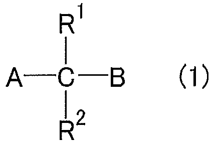 wherein R¹ and R² are the same or different and each represent a hydrogen atom or a C1-C30 monovalent hydrocarbon group; and A and B are the same or different and each represent a group represented by the following formula (2): 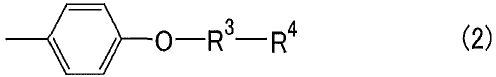 wherein R³ represents a C1-C30 divalent hydrocarbon group; and R⁴ represents a cyclic ether group.

Preferably, the rubber composition contains at least one of carbon black or silica; and a styrene butadiene rubber having a styrene content of 19% to 60% by mass, the styrene butadiene rubber is present in an amount of 10% to 100% by mass based on 100% by mass of the rubber component, and the at least one of carbon black or silica is present in a combined amount of 30 to 150 parts by mass per 100 parts by mass of the rubber component.

The rubber composition preferably contains an acrylic resin containing at least one of a carboxyl group or a hydroxy group.

The rubber composition is preferably used for applications requiring grip force.

The rubber composition is preferably a rubber composition for rubber soles.

The rubber composition is preferably a rubber composition for industrial belts.

The rubber composition is preferably a rubber composition for tire treads.

The present invention also relates to a pneumatic tire, including a tread formed from the rubber composition.

### ADVANTAGEOUS EFFECTS OF INVENTION

The rubber composition of the present invention contains: a rubber component; sulfur; and a specific compound, the rubber component includes 60% to 100% by mass of a diene rubber based on 100% by mass of the rubber component, and the specific compound is present in an amount of 0.1 to 30 parts by mass per 100 parts by mass of the rubber component. Such a rubber composition can improve hysteresis loss to allow for simultaneous improvement in initial grip performance and stable grip performance during mid and late running, especially on dry roads, while ensuring good abrasion resistance.

### DESCRIPTION OF EMBODIMENTS

The rubber composition of the present invention contains:
a rubber component;
sulfur; and
a compound represented by the formula (1) below. The rubber component includes 60% to 100% by mass of a diene rubber based on 100% by mass of the rubber component. The compound of formula (1) is present in an amount of 0.1 to 30 parts by mass per 100 parts by mass of the rubber component.

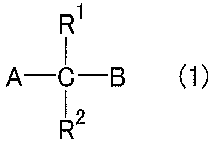

In formula (1), R¹ and R² are the same or different and each represent a hydrogen atom or a C1-C30 monovalent hydrocarbon group; and A and B are the same or different and each represent a group represented by the following formula (2) : 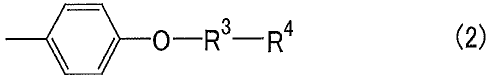 wherein R³ represents a C1-C30 divalent hydrocarbon group; and R⁴ represents a cyclic ether group.

The rubber composition containing a compound represented by formula (1) as an additive can greatly improve hysteresis loss to allow for simultaneous high level improvement in initial grip performance and stable grip performance during mid and late running, especially on dry roads, while ensuring good abrasion resistance.

The reason for this is not exactly clear, but it is probably that the compound of formula (1) containing highly polar ether and cyclic ether groups interacts very strongly with polymers, filer or silane coupling agents so that the resulting rubber composition has increased hysteresis loss leading to the above-mentioned effect. Moreover, the ether group allows for easy rotation of the molecule around the oxygen atom, and also constitutes a part of the essential structure of surfactants or softeners. For this reason, it is presumed that the presence of an ether group between the benzene ring and R³ in the compound of formula (1) ensures good free rotation of the molecule and mobility in the rubber composition, thereby further increasing the hysteresis loss of the rubber composition.

The rubber composition of the present invention contains a rubber component.

Examples of the rubber component include diene rubbers such as natural rubber (NR), polyisoprene rubber (IR), polybutadiene rubber (BR), styrene butadiene rubber (SBR), styrene isoprene butadiene rubber (SIBR), ethylene propylene diene rubber (EPDM), chloroprene rubber (CR), acrylonitrile butadiene rubber (NBR), and butyl rubber (IIR). These materials as the rubber component may be used alone, or two or more of these may be used in combination. In order to achieve a better balance between grip performance and abrasion resistance, the rubber component is preferably at least one selected from the group consisting of NR, BR and SBR, more preferably BR and/or SBR, and still more preferably SBR.

The amount of the diene rubber component based on 100% by mass of the rubber component is 60% by mass or more, preferably 80% by mass or more, more preferably 90% by mass or more, and may be 100% by mass. When the amount is within the range indicated above, the effects of the present invention can be suitably achieved.

Any type of SBR may be used. Examples include emulsion-polymerized styrene butadiene rubber (E-SBR), solution-polymerized styrene butadiene rubber (S-SBR), and process oil-extended high molecular weight styrene butadiene rubber. S-SBR is particularly preferred to more efficiently exert the effects of the present invention.

The SBR preferably has a styrene content of 19% by mass or more, more preferably 25% by mass or more, still more preferably 30% by mass or more, particularly preferably 35% by mass or more. With SBR having a styrene content of less than 19% by mass, sufficient grip performance tends not to be obtained. The styrene content is also preferably 60% by mass or less, more preferably 50% by mass or less. With SBR having a styrene content of more than 60% by mass, crosslinking tends to occur unevenly on the SBR polymer chain, thereby resulting in reduction in elongation at break and abrasion resistance; further, temperature dependence tends to increase so that greater changes in properties can be caused by temperature changes, with the result that stable grip performance during mid and late running tends not to be well achieved. In the present invention, the styrene content of SBR is calculated based on ¹H-NMR analysis.

In the case of the rubber composition of the present invention containing SBR, the amount of the SBR based on 100% by mass of the rubber component is preferably 10% by mass or more, more preferably 15% by mass or more, still more preferably 50% by mass or more, particularly preferably 60% by mass or more. For use in high performance tires such as racing tires, the amount is most preferably 80 parts by mass or more. Less than 10% by mass of SBR tends not to provide sufficient heat resistance, grip performance, and abrasion resistance. The upper limit of the amount of the SBR is not particularly limited and may be 100% by mass.

Any type of BR may be used, including those commonly used in the tire industry. Examples include BR with high cis content (high-cis BR) such as BR1220 available from Zeon Corporation, CB24 available from Lanxess, and BR150B available from Ube Industries, Ltd.; 1,2-syndiotactic polybutadiene crystal (SPB)-containing BR such as VCR412 and VCR617 both available from Ube Industries, Ltd.; and BR synthesized using rare earth catalysts (rare earth-catalyzed BR).

In the case of the rubber composition of the present invention containing BR, the amount of the BR based on 100% by mass of the rubber component is preferably 10% by mass or more, more preferably 20% by mass or more. The amount of the BR is also preferably 50% by mass or less, more preferably 40% by mass or less. When the amount is within the range indicated above, the effects of the present invention can be better achieved.

Examples of NR include those commonly used in the tire industry, such as SIR20, RSS#3, and TSR20.

In the case of the rubber composition of the present invention containing NR, the amount of the NR based on 100% by mass of the rubber component is preferably 10% by mass or more, more preferably 15% by mass or more. The upper limit of the amount is not particularly limited.

The combined amount of SBR, BR and NR, preferably of SBR and BR, based on 100% by mass of the rubber component is preferably 80% by mass or more, more preferably 100% by mass. When the combined amount is within the range indicated above, the effects of the present invention can be better achieved.

The rubber composition of the present invention contains a compound represented by the following formula (1): 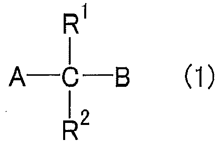 wherein R¹ and R² are the same or different and each represent a hydrogen atom or a C1-C30 monovalent hydrocarbon group; and A and B are the same or different and each represent a group represented by the following formula (2): 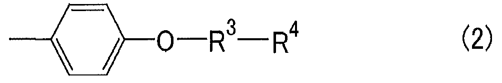 wherein R³ represents a C1-C30 divalent hydrocarbon group; and R⁴ represents a cyclic ether group.

The monovalent hydrocarbon group for R¹ and R² may be linear, branched, or cyclic, and examples include aliphatic hydrocarbon groups, alicyclic hydrocarbon groups, and aromatic hydrocarbon groups, with aliphatic hydrocarbon groups being preferred. The hydrocarbon group preferably has 1 to 20 carbon atoms, more preferably 1 to 10 carbon atoms, still more preferably 1 to 3 carbon atoms.

The aliphatic hydrocarbon group for R¹ and R² preferably has 1 to 20 carbon atoms, more preferably 1 to 10 carbon atoms, still more preferably 1 to 3 carbon atoms. Preferred examples include alkyl groups having the above number of carbon atoms. Specific examples include methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups. Among these, a methyl group is preferred to better achieve the effects of the present invention.

The alicyclic hydrocarbon group for R¹ and R² preferably has 3 to 8 carbon atoms, and specific examples include cyclopropyl, cyclobutyl, cyclopentyl, cyclohexyl, cycloheptyl, cyclooctyl, cyclopropenyl, cyclobutenyl, cyclopentenyl, cyclohexenyl, cycloheptenyl, and cyclooctenyl groups.

The aromatic hydrocarbon group for R¹ and R² preferably has 6 to 10 carbon atoms, and specific examples include phenyl, benzyl, phenethyl, tolyl, xylyl, and naphthyl groups. The methyl substituent on the benzene ring of a tolyl or xylyl group may be located at any of the ortho, meta, or para positions.

R¹ and R² are the same or different and are each preferably a hydrogen atom or a C1-C3 alkyl group, more preferably a C1-C3 alkyl group, still more preferably a methyl group. In such cases, the effects of the present invention can be better achieved.

Preferably, A and B are the same group. In this case, the compound of formula (1) has a bilaterally symmetric structure which further ensures that the compound of formula (1) shows good mobility in the rubber composition, thereby further increasing the hysteresis loss of the rubber composition.

Examples of the divalent hydrocarbon group for R³ include branched or unbranched C1-C30 alkylene groups, branched or unbranched C2-C30 alkenylene groups, branched or unbranched alkynylene groups, and C6-C30 arylene groups, with branched or unbranched C1-C30 alkylene groups being preferred.

Examples of the branched or unbranched C1-C30, preferably C1-C15, more preferably C1-C3 alkylene group for R³ include methylene, ethylene, propylene, butylene, pentylene, hexylene, heptylene, octylene, nonylene, decylene, undecylene, dodecylene, tridecylene, tetradecylene, pentadecylene, hexadecylene, heptadecylene, and octadecylene groups. Among these, a methylene group is preferred to better achieve the effects of the present invention.

Examples of the branched or unbranched C2-C30, preferably C2-C15, more preferably C2-C3 alkenylene group for R³ include vinylene, 1-propenylene, 2-propenylene, 1-butenylene, 2-butenylene, 1-pentenylene, 2-pentenylene, 1-hexenylene, 2-hexenylene, and 1-octenylene groups.

Examples of the branched or unbranched C2-C30, preferably C2-C15, more preferably C2-C3 alkynylene group for R³ include ethynylene, propynylene, butynylene, pentynylene, hexynylene, heptynylene, octynylene, nonynylene, decynylene, undecynylene, and dodecynylene groups.

Examples of the C6-C30, preferably C6-C15 arylene group for R³ include phenylene, tolylene, xylylene, and naphthylene groups.

R³ is preferably a branched or unbranched C1-C3 alkylene group, more preferably a methylene group. In such case, the effects of the present invention can be better achieved.

Examples of the cyclic ether group for R⁴ include cyclic ether groups having one ether bond, such as oxirane, oxetane, oxolane, oxane, oxepane, oxocane, oxonane, oxecane, oxete, and oxole groups; cyclic ether groups having two ether bonds, such as dioxolane, dioxane, dioxepane, and dioxecane groups; and cyclic ether groups having three ether bonds, such as a trioxane group. Among these, C2-C7 cyclic ether groups having one ether bond are preferred, with C2-C5 cyclic ether groups having one ether bond being more preferred, with an oxirane group being still more preferred. The cyclic ether group preferably has no unsaturated bond in the ring skeleton. The hydrogen atom in the cyclic ether group may optionally be replaced by the above-described monovalent hydrocarbon group.

The compound of formula (1) may be a commercial product, such as, specifically, bisphenol A diglycidyl ether (2,2-bis(4-glycidyloxyphenyl)propane available from Tokyo Chemical Industry Co., Ltd., and other manufacturers), bis(4-glycidyloxyphenyl)methane, bis(4-glycidyloxyphenyl)ethane, bis(4-glycidyloxyphenyl)butane, and bis(4-glycidyloxyphenyl)pentane. Among these, bisphenol A diglycidyl ether is preferred to better achieve the effects of the present invention. Each of these compounds may be used alone, or two or more of these may be used in combination.

The amount of the compound of formula (1) per 100 parts by mass of the rubber component is 0.1 parts by mass or more, preferably 0.5 parts by mass or more, more preferably 1 part by mass or more, still more preferably 2 parts by mass or more. If the amount is less than 0.1 parts by mass, the effects of the present invention may not be sufficiently achieved. The amount of the compound is 30 parts by mass or less, preferably 22 parts by mass or less. In order to obtain better abrasion resistance and a better balance of initial grip performance, stable grip performance during mid and late running, and abrasion resistance, the amount is more preferably 18 parts by mass or less, still more preferably 12 parts by mass or less. If the amount is more than 30 parts by mass, initial grip performance, stable grip performance during mid and late running, or abrasion resistance may deteriorate.

The rubber composition of the present invention contains sulfur.

Examples of sulfur include those commonly used in the rubber industry, such as sulfur powder, precipitated sulfur, colloidal sulfur, insoluble sulfur, highly dispersible sulfur, and soluble sulfur.

The amount of the sulfur per 100 parts by mass of the rubber component is preferably 0.1 to 10 parts by mass, more preferably 0.15 to 5 parts by mass, still more preferably 0.2 to 2 parts by mass.

The rubber composition of the present invention preferably contains at least one resin selected from the group consisting of acrylic resins, alkylphenolic resins, and terpenic resins. The incorporation of the above resin in addition to the compound of formula (1) can provide better initial grip performance and more stable grip performance during mid and late running (especially better initial grip performance) while ensuring good abrasion resistance. Among these, acrylic resins are preferred to better achieve the effects of the present invention (especially the effect of improving stable grip performance during mid and late running). Also preferred are combinations of alkylphenolic resins with at least one selected from the group consisting of acrylic resins and terpenic resins.

In order to better achieve the effects of the present invention, the acrylic resin may suitably be a solvent-free acrylic resin.

The solvent-free acrylic resin refers to a (meth) acrylic resin (polymer) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, annual research report TREND 2000 issued by Toagosei Co., Ltd., vol. 3, pp. 42-45) using no or minimal amounts of auxiliary raw materials such as polymerization initiators, chain transfer agents, and organic solvents. In the present invention, the term "(meth)acrylic" means methacrylic and acrylic.

Preferably, the acrylic resin is substantially free of auxiliary raw materials such as polymerization initiators, chain transfer agents, and organic solvents. Also, in view of the effects of the present invention, the acrylic resin is preferably one obtained by continuous polymerization and having a relatively narrow composition distribution or molecular weight distribution.

As described above, the acrylic resin is preferably one which is substantially free of auxiliary raw materials such as polymerization initiators, chain transfer agents, and organic solvents, namely, which is of high purity. The purity of the acrylic resin (the resin content in the resin) is preferably 95% by mass or more, more preferably 97% by mass or more.

Examples of the monomer component of the acrylic resin include (meth) acrylic acid and (meth) acrylic acid derivatives such as (meth)acrylic acid esters (alkyl esters, aryl esters, aralkyl esters, and the like), (meth)acrylamide, and (meth)acrylamide derivatives. The term "(meth)acrylic acid" is a general term for acrylic acid and methacrylic acid.

The monomer component of the acrylic resin may include (meth)acrylic acid or (meth)acrylic acid derivatives together with aromatic vinyls such as styrene, α-methylstyrene, vinyltoluene, vinylnaphthalene, divinylbenzene, trivinylbenzene, or divinylnaphthalene.

The acrylic resin may be formed only of a (meth) acrylic component or may further contain constituents other than the (meth)acrylic component. In order to achieve better initial grip performance and more stable grip performance during mid and late running, the acrylic resin is preferably a styrene acrylic resin (solvent-free styrene acrylic resin) containing a constituent component derived from styrene together with a (meth)acrylic component. In order to achieve better abrasion resistance, the acrylic resin is preferably an all-acrylic resin (solvent-free all-acrylic resin) formed only of a (meth)acryl component.

The acrylic resin may contain, for example, a hydroxy group, a carboxyl group, an epoxy group, or a silanol group. The acrylic resin preferably contains a hydroxy group or a carboxyl group, more preferably a carboxyl group, among others, because the combined use of such an acrylic resin with the compound of formula (1) can further improve hysteresis loss, thereby producing synergistic effects in improving initial grip performance and abrasion resistance and in improving the average or balance of initial grip performance, stable grip performance during mid and late running, and abrasion resistance, which effects are greater than the mere sum of those obtained when they are used alone. The reason for these effects is not exactly clear, but it is probably that the hydroxy group or carboxyl group in such an acrylic resin reacts with and binds to the cyclic ether group of the compound of formula (1), thereby functioning as a side chain that generates hysteresis loss, and that thus the compound of formula (1) promotes dispersion of the acrylic resin.

Any alkylphenolic resin may be used, and examples include alkylphenol-aldehyde condensation resins obtained by reaction of alkylphenols and aldehydes such as formaldehyde, acetaldehyde, or furfural using acid or alkali catalysts; alkylphenol-alkyne condensation resins obtained by reaction of alkylphenols and alkynes such as acetylene; and modified alkylphenol resins obtained by modifying the foregoing resins with compounds such as cashew oil, tall oil, linseed oil, various animal and vegetable oils, unsaturated fatty acids, rosin, alkylbenzene resins, aniline, or melamine. Among these, alkylphenol-alkyne condensation resins are preferred, with alkylphenol-acetylene condensation resins being particularly preferred, because the effects of the present invention can be better achieved.

Examples of the alkylphenol of the alkylphenolic resin include cresol, xylenol, t-butylphenol, octylphenol, and nonylphenol. Among these, phenols containing branched alkyl groups, such as t-butylphenol, are preferred, with t-butylphenol being particularly preferred.

Examples of the terpenic resin include: terpene resins such as α-pinene resin, β-pinene resin, limonene resin, dipentene resin, and β-pinene-limonene resin; aromatic terpene resins formed from terpene compounds and aromatic compounds; terpene phenol resins formed from terpene compounds and phenolic compounds; and hydrogenated terpene resins obtained by hydrogenation of terpene resins. Examples of the aromatic compound as a raw material of the aromatic terpene resin include styrene, α-methylstyrene, vinyltoluene, and divinyltoluene. Examples of the phenolic compound as a raw material of the terpene phenol resin include phenol, bisphenol A, cresol, and xylenol. Preferred terpenic resins are aromatic terpene resins or terpene phenol resins.

The acrylic resin, alkylphenolic resin, and terpenic resin each preferably have a nitrogen adsorption specific surface area (N₂SA) of 0.5 m²/g or more, more preferably 1.0 m²/g or more, still more preferably 2.0 m²/g or more. When the N₂SA is 0.5 m²/g or more, the effects of the present invention can be more suitably achieved. The upper limit of the N₂SA is not particularly limited. In the present invention, the nitrogen adsorption specific surface area of the acrylic resin, alkylphenolic resin, and terpenic resin is determined in conformity with JIS K 6217-2:2001.

The acrylic resin, alkylphenolic resin, or terpenic resin having a N₂SA of 0.5 m²/g or more may be prepared, for example, by subjecting a commercially available acrylic resin, alkylphenolic resin, or terpenic resin to grinding or other treatments to impart the above N₂SA and other properties to the resin. The grinding treatment may be carried out by conventional methods, such as wet grinding or dry grinding using, for example, a jet mill, a current jet mill, a counter jet mill, or a contraplex mill.

The acrylic resin and terpenic resin each preferably have a glass transition point (Tg) (°C/DSC) of 0°C or higher, more preferably 30°C or higher, still more preferably 50°C or higher. The Tg is also preferably 110°C or lower, more preferably 105°C or lower, still more preferably 100°C or lower, particularly preferably 80°C or lower. With the resin having a Tg of lower than 0°C, although the effect of improving initial grip performance is obtained, stable grip performance during mid and late running or abrasion resistance may not be well achieved. With the resin having a Tg of higher than 110°C, although the effect of improving grip performance during late running or under extremely hot conditions is obtained, initial grip performance or abrasion resistance may not be well achieved.

In the present invention, the glass transition point of the acrylic resin and terpenic resin is determined in conformity with JIS K 7121 by differential scanning calorimetry (DSC) at a rate of temperature rise of 10°C/min.

The alkylphenolic resin preferably has a Tg of 60°C or higher, more preferably 65°C or higher, still more preferably 80°C or higher. The Tg is also preferably 110°C or lower, more preferably 105°C or lower, still more preferably 100°C or lower. With the resin having a Tg of lower than 60°C, although the effect of improving initial grip performance is obtained, stable grip performance during mid and late running or abrasion resistance may not be well achieved. With the resin having a Tg of higher than 110°C, although the effect of improving grip performance during late running or under extremely hot conditions is obtained, initial grip performance or abrasion resistance may not be well achieved.

In the present invention, the glass transition point of the alkylphenolic resin is determined in conformity with JIS K 7121 by differential scanning calorimetry (DSC) at a rate of temperature rise of 10°C/min.

The acrylic resin and alkylphenolic resin each preferably have a hydroxyl value (OH value) of 15 mg KOH/g or more, more preferably 30 mg KOH/g or more. The OH value is also preferably 350 mg KOH/g or less, more preferably 300 mg KOH/g or less. With the resin having an OH value of less than 15 mg KOH/g, neither high levels of initial grip nor grip performance during mid and late running may be obtained. The resin having an OH value of more than 350 mg KOH/g may be poorly compatible with the rubber component, thereby failing to provide sufficient breaking properties, with the result that abrasion resistance may significantly deteriorate.

In the present invention, the OH value of the acrylic resin, alkylphenolic resin, and terpenic resin refers to the amount in milligrams of potassium hydroxide required to neutralize the acetic acid which combines with hydroxyl groups on acetylation of 1 g of the resin, and is measured by potentiometric titration (JIS K 0070:1992). For carboxyl group-containing acrylic resins, since they do not undergo acetylation with acetic acid and thus the OH value cannot be measured, they are characterized using acid value described later, instead of OH value.

Specifically, the acrylic resin preferably has an OH value of 50 mg KOH/g or more, more preferably 60 mg KOH/g or more. The OH value is also preferably 150 mg KOH/g or less, more preferably 100 mg KOH/g or less. When the OH value is within the range indicated above, the effects of the present invention can be sufficiently achieved.

Specifically, the alkylphenolic resin preferably has an OH value of 100 mg KOH/g or more, more preferably 150 mg KOH/g or more. When the OH value is within the range indicated above, the effects of the present invention can be sufficiently achieved.

The terpenic resin may have a hydroxyl value (OH value) of 0 mg KOH/g but preferably has an OH value of 15 mg KOH/g or more, more preferably 30 mg KOH/g or more, still more preferably 40 mg KOH/g or more. The OH value is also preferably 350 mg KOH/g or less, more preferably 300 mg KOH/g or less, still more preferably 150 mg KOH/g or less, particularly preferably 100 mg KOH/g or less. The resin having an OH value of more than 350 mg KOH/g may be poorly compatible with the rubber component, thereby failing to provide sufficient breaking properties, with the result that abrasion resistance may significantly deteriorate.

The carboxyl group-containing acrylic resin preferably has an acid value of 15 mg KOH/g or more, more preferably 30 mg KOH/g or more, still more preferably 50 mg KOH/g or more. The acid value is also preferably 350 mg KOH/g or less, more preferably 300 mg KOH/g or less, still more preferably 280 mg KOH/g or less. With the resin having an acid value of less than 15 mg KOH/g, neither high levels of initial grip nor grip performance during mid and late running may be obtained. The resin having an acid value of more than 350 mg KOH/g may be poorly compatible with the rubber component, thereby failing to provide sufficient breaking properties, with the result that abrasion resistance may significantly deteriorate.

In the present invention, the acid value of the carboxyl group-containing acrylic resin refers to the amount in milligrams of potassium hydroxide required to neutralize the acids in 1 g of the resin, and is measured by potentiometric titration (JIS K 0070:1992).

The acrylic resin preferably has a weight average molecular weight (Mw) of 2,000 or more, more preferably 3,000 or more. The Mw is also preferably 20,000 or less, more preferably 19, 000 or less, still more preferably 18,000 or less. With the resin having a Mw of less than 2, 000, although initial grip performance is improved, stable grip performance during mid and late running may not be well achieved. The resin having a Mw of more than 20,000 may show deterioration in dispersibility in rubber and blooming to the tire surface during mid and late running, resulting in less improvement in grip performance.

The alkylphenolic resin and terpenic resin each preferably have a weight average molecular weight (Mw) of 500 or more, more preferably 530 or more. The Mw is also preferably 2,000 or less, more preferably 1,500 or less. With the resin having a Mw of less than 500, although initial grip performance is improved, stable grip performance during mid and late running may not be well achieved. The resin having a Mw of more than 2,000 may show deterioration in dispersibility in rubber and blooming to the tire surface during mid and late running, resulting in less improvement in grip performance.

In the present invention, the Mw of the acrylic resin, alkylphenolic resin, and terpenic resin is measured by gel permeation chromatography (GPC) calibrated with polystyrene standards.

Specific examples of the acrylic resin include ARUFON series available from Toagosei Co., Ltd. (UH-2170, UC-3000, UC-3900, UC-3920, UF-5080, UF-5022, UG-4035, UG-4040, UG-4070). Specific examples of the alkylphenolic resin include Koresin available from BASF. Specific examples of the terpenic resin include YS POLYSTER series available from Yasuhara Chemical Co. , Ltd. (T160, T145, S145) and Sylvares TP115 available from Arizona Chemical.

In the case of the rubber composition of the present invention containing an acrylic resin, the amount of the acrylic resin per 100 parts by mass of the rubber component is preferably 1 part by mass or more, more preferably 2 parts by mass or more, still more preferably 3 parts by mass or more, particularly preferably 5 parts by mass or more. The amount is also preferably 50 parts by mass or less, more preferably 40 parts by mass or less, still more preferably 30 parts by mass or less, particularly preferably 20 parts by mass or less. An amount of less than 1 part by mass may not provide a sufficient adhesion effect, with the result that neither initial grip performance nor grip performance during running may be improved. An amount of more than 50 parts by mass may lead to insufficient breaking properties and significant deterioration in abrasion resistance.

In the case of the rubber composition of the present invention containing an alkylphenolic resin, the amount of the alkylphenolic resin per 100 parts by mass of the rubber component is preferably 1 part by mass or more, more preferably 2 parts by mass or more, still more preferably 4 parts by mass or more, particularly preferably 15 parts by mass or more. The amount is also preferably 100 parts by mass or less, more preferably 80 parts by mass or less, still more preferably 70 parts by mass or less. An amount of less than 1 part by mass may not provide a sufficient adhesion effect, with the result that neither initial grip performance nor grip performance during running may be improved. An amount of more than 100 parts by mass may lead to reduced initial grip performance, insufficient breaking properties, and significant deterioration in abrasion resistance.

In the case of the rubber composition of the present invention containing a terpenic resin, the amount of the terpenic resin per 100 parts by mass of the rubber component is preferably 1 part by mass or more, more preferably 2 parts by mass or more, still more preferably 3 parts by mass or more, particularly preferably 6 parts by mass or more. The amount is also preferably 50 parts by mass or less, more preferably 40 parts by mass or less, still more preferably 30 parts by mass or less. An amount of less than 1 part by mass may not provide a sufficient adhesion effect, with the result that neither initial grip performance nor grip performance during running may be improved. An amount of more than 50 parts by mass may lead to insufficient breaking properties and significant deterioration in abrasion resistance.

The combined amount of the acrylic resin, alkylphenolic resin, and terpenic resin per 100 parts by mass of the rubber component is preferably 1 part by mass or more, preferably 5 parts by mass or more, more preferably 20 parts by mass, still more preferably 30 parts by mass or more. The combined amount is also preferably 100 parts by mass or less, more preferably 80 parts by mass or less, still more preferably 70 parts by mass or less. A combined amount of less than 1 part by mass may not provide a sufficient adhesion effect, with the result that neither initial grip performance nor grip performance during mid and late running may be improved. A combined amount of more than 100 parts by mass may lead to insufficient breaking properties and significant deterioration in abrasion resistance.

In view of initial grip performance, stable grip performance during mid and late running, and other aspects, the rubber composition of the present invention preferably further incorporates a softener. Any softener may be used, and examples include oil, liquid diene polymers, and low temperature plasticizers such as TOP or DOS.

Examples of oil include process oils such as paraffinic, aromatic, and naphthenic process oils.

In the case of the rubber composition of the present invention containing oil, the amount of the oil per 100 parts by mass of the rubber component is preferably 20 parts by mass or more, more preferably 25 parts by mass or more, still more preferably 40 parts by mass or more. The amount is also preferably 85 parts by mass or less, more preferably 75 parts by mass or less. The addition of less than 20 parts by mass of oil may produce no effect. More than 85 parts by mass of oil tends to deteriorate abrasion resistance. The amount of the oil herein includes the oil contained in oil-extended rubber.

A liquid diene polymer refers to a diene polymer that is in the liquid state at a room temperature (25°C).

The liquid diene polymer preferably has a polystyrene equivalent weight average molecular weight (Mw) measured by gel permeation chromatography (GPC) of 1.0 x 10³ to 2.0 x 10⁵, more preferably 3.0 x 10³ to 1.5 × 10⁴. The polymer having a Mw of less than 1.0 × 10³ may not be effective in improving grip performance, and may make it impossible to ensure sufficient durability. When the Mw is more than 2.0 × 10⁵, the polymerization solution may have excessively high viscosity leading to deterioration of productivity, and breaking properties or abrasion resistance may decrease. In the present invention, the Mw of the liquid diene polymer is measured by gel permeation chromatography (GPC) calibrated with polystyrene standards.

Examples of the liquid diene polymer include liquid styrene butadiene copolymers (liquid SBR), liquid polybutadiene (liquid BR), liquid polyisoprene (liquid IR), and liquid styrene isoprene copolymers (liquid SIR). Among these, liquid SBR is preferred to obtain a good balance of abrasion resistance and stable grip performance during mid and late running.

In the case of the rubber composition of the present invention containing a liquid diene polymer, the amount of the liquid diene polymer per 100 parts by mass of the rubber component is preferably 10 parts by mass or more, more preferably 20 parts by mass or more, still more preferably 30 parts by mass or more. The amount is also preferably 120 parts by mass or less, more preferably 80 parts by mass or less, still more preferably 65 parts by mass or less. Less than 10 parts by mass of the polymer tends not to provide sufficient grip performance. More than 120 parts by mass of the polymer tends to deteriorate abrasion resistance.

The combined amount of the acrylic resin, alkylphenolic resin, terpenic resin, oil, low temperature plasticizer, and liquid diene polymer, per 100 parts by mass of the rubber component, is preferably 50 to 250 parts by mass, more preferably 100 to 200 parts by mass, still more preferably 120 to 180 parts by mass. When the combined amount is within the range indicated above, the effects of the present invention can be more suitably achieved.

The rubber composition of the present invention preferably contains carbon black and/or silica, more preferably carbon black.

The carbon black preferably has a nitrogen adsorption specific surface area (N₂SA) of 100 m²/g or more, more preferably 105 m²/g or more, still more preferably 150 m²/g or more. The N₂SA is also preferably 600 m²/g or less, more preferably 250 m²/g or less, still more preferably 200 m²/g or less. With carbon black having a N₂SA of less than 100 m²/g, grip performance tends to decrease. Carbon black having a N₂SA of more than 600 m²/g is less likely to disperse well, with the result that abrasion resistance tends to decrease. The N₂SA of the carbon black is determined in conformity with ASTM D 6556.

The carbon black preferably has a cetyltrimethylammonium bromide (CTAB) specific surface area of 100 m²/g or more, more preferably 120 m²/g or more. The N₂SA is also preferably 300 m²/g or less, more preferably 250 m²/g or less. With carbon black having a CTAB of less than 100 m²/g, grip performance tends to decrease. Carbon black having a CTAB of more than 300 m²/g is less likely to disperse well, with the result that abrasion resistance tends to decrease. The CTAB specific surface area of the carbon black is determined in conformity with ASTM D37 65.

In the case of the rubber composition of the present invention containing carbon black, the amount of the carbon black per 100 parts by mass of the rubber component is preferably 10 parts by mass or more, more preferably 20 parts by mass or more, still more preferably 50 parts by mass or more, particularly preferably 80 parts by mass or more, most preferably 100 parts by mass or more. The amount is also preferably 200 parts by mass or less, more preferably 150 parts by mass or less. An amount of less than 10 parts by mass may lead to insufficient abrasion resistance or grip performance. An amount of more than 200 parts by mass may reduce breaking properties, abrasion resistance, and grip performance.

Any type of silica may be used, and examples include dry silica (anhydrous silicic acid) and wet silica (hydrous silicic acid). Each of these silicas may be used alone, or two or more of these may be used in combination. Preferred is wet silica as it contains a large number of silanol groups.

The silica preferably has a nitrogen adsorption specific surface area (N₂SA) of 50 m²/g or more, more preferably 100 m²/g or more, still more preferably 150 m²/g or more. With silica having a N₂SA of less than 50 m²/g, abrasion resistance tends to decrease. The N₂SA is preferably 280 m²/g or less, more preferably 250 m²/g or less. Silica having a N₂SA of more than 280 m²/g is difficult to disperse, adversely resulting in deterioration of abrasion resistance.

The N₂SA of the silica is determined by the BET method in conformity with ASTM D3037-93.

In the case of the rubber composition of the present invention containing silica for use in passenger vehicles, the amount of the silica per 100 parts by mass of the rubber component is preferably 10 parts by mass or more, more preferably 30 parts by mass or more, still more preferably 50 parts by mass or more. When the amount is less than 10 parts by mass, sufficient wet grip performance may not be obtained. The amount of the silica is also preferably 140 parts by mass or less, more preferably 120 parts by mass or less. When the amount is more than 140 parts by mass, abrasion resistance may decrease.

In the case of the rubber composition of the present invention containing carbon black and/or silica, the combined amount of the carbon black and silica per 100 parts by mass of the rubber component is preferably 30 parts by mass or more, more preferably 40 parts by mass or more, still more preferably 60 parts by mass or more, particularly preferably 70 parts by mass or more. The combined amount is also preferably 150 parts by mass or less, more preferably 140 parts by mass or less. When the combined amount is within the range indicated above, the effects of the present invention can be better achieved.

The rubber composition of the present invention preferably contains at least one inorganic filler selected from the group consisting of compounds represented by the formula below, magnesium sulfate, and silicon carbide. The incorporation of the inorganic filler in addition to the compound of formula (1) can more suitably improve initial grip performance and stable grip performance during mid and late running, with the result that the effects of the present invention can be better achieved.

mM · xSiO_{y} · zH₂O

In the formula, M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

Examples of the compound of the above formula include alumina, alumina hydrate, aluminum hydroxide, magnesium hydroxide, magnesium oxide, talc, titanium white, titanium black, calcium oxide, calcium hydroxide, magnesium aluminum oxide, clay, pyrophyllite, bentonite, aluminum silicate, magnesium silicate, calcium silicate, calcium aluminum silicate, magnesium silicate, zirconium, and zirconium oxide. Each of these inorganic compounds may be used alone, or two or more of these may be used in combination.

Preferred are inorganic fillers in which M is Al or Zr metal or an oxide or hydroxide of the metal because they have a Mohs hardness of 3 or more and show water resistance and oil resistance, and they, when processed into micron-sized particles, produce a scratching effect or they promote blooming of adhesive components which provide grip performance, thereby improving grip performance, and also because they provide good abrasion resistance. More preferred is aluminum hydroxide or zirconium oxide because they are abundant resources and inexpensive. Aluminum hydroxide is particularly preferred as it further provides good kneading productivity and good extrusion processability.

The inorganic filler preferably has a nitrogen adsorption specific surface area (N₂SA) of 5 to 120 m²/g. A N₂SA outside the range indicated above may lead to deterioration in abrasion resistance and grip performance. The lower limit of the N₂SA is preferably 10 m²/g, more preferably 13 m²/g, while the upper limit of the N₂SA is preferably 120 m²/g, more preferably 115 m²/g, still more preferably 110 m²/g.

The N₂SA of the inorganic filler is determined by the BET method in conformity with ASTM D3037-81.

The inorganic filler preferably has an average particle size of 1.5 µm or less, more preferably 0.69 µm or less, still more preferably 0.6 pm or less. The average particle size is also preferably 0.2 µm or more, more preferably 0.25 µm or more, still more preferably 0. 4 um or more. With the inorganic filler having an average particle size of more than 1.5 µm, abrasion resistance and grip performance may decrease. The inorganic filler having an average particle size of less than 0.2 µm may easily cause secondary aggregation in rubber, adversely resulting in a decrease in abrasion resistance or grip performance. The average particle size of the inorganic filler refers to a number average particle size as measured with a transmission electron microscope (TEM) or a scanning electron microscope (SEM).

In order to ensure abrasion resistance and grip performance of tires and to reduce metal wear of Banbury mixers or extruders, the inorganic filler preferably has a Mohs hardness of 7 like silica, or less than 7, more preferably of 2 to 5. Mohs hardness, which is one of the mechanical properties of materials, is a measure commonly used through the ages in mineral-related fields. Mohs hardness is measured by scratching a material (e.g. aluminum hydroxide) to be analyzed for hardness with a reference material followed by checking for the presence of scratches.

In particular, it is preferred to use an inorganic filler which has a Mohs hardness of less than 7 and whose dehydration reaction product has a Mohs hardness of 8 or more. For example, aluminum hydroxide, which has a Mohs hardness of about 3, allows for the prevention of abrasion (wear) of Banbury mixers or rolls. In addition, the upper surface layer of aluminum hydroxide undergoes a dehydration reaction (transition) due to vibration or heat build-up during mid and late running and partially due to kneading and is thereby converted to alumina having a Mohs hardness of about 9, which is equal to or harder than that of the stones on the road surface, with the result that excellent abrasion resistance and wet grip performance can be obtained. The internal aluminum hydroxide needs not to be entirely converted, and its partial conversion can provide the effect of scratching the road surface. Furthermore, aluminum hydroxide and alumina are stable to water, bases, and acids, and neither inhibit curing nor promote oxidative degradation. The inorganic filler after the transition more preferably has a Mohs hardness of 7 or more, with no upper limitation. Diamond has the highest hardness of 10.

The inorganic filler preferably has a thermal decomposition onset temperature (DSC endothermic onset temperature) of 160°C to 500°C, more preferably 170°C to 400°C. When the inorganic filler has a thermal decomposition onset temperature of lower than 160°C, thermal decomposition or reaggregation may excessively proceed during kneading, so that the metal of the kneader rotor blades, the vessel wall, or the like may be excessively worn. The thermal decomposition onset temperature of the inorganic filler is determined by differential scanning calorimetry (DSC). It should also be noted that the thermal decomposition includes dehydration reactions.

The inorganic filler may be a commercial product having the N₂SA range indicated above, or may also be, for example, an inorganic filler having been processed into particles with the above properties by grinding or other treatments. The grinding treatment may be carried out by conventional methods, such as wet grinding or dry grinding using, for example, a jet mill, a current jet mill, a counter jet mill, or a contraplex mill.

If necessary, an inorganic filler having a certain N₂SA may be prepared by fractionation by a membrane filtering method widely employed in the medical or bio fields, before use as a compounding agent for rubber.

In the case of the rubber composition of the present invention containing the inorganic filler, the amount of the inorganic filler per 100 parts by mass of the rubber component is preferably 1 part by mass or more, more preferably 3 parts by mass or more, still more preferably 5 parts by mass or more. An amount of less than 1 part by mass may lead to insufficient grip performance. The amount is also preferably 70 parts by mass or less, more preferably 60 parts by mass or less, still more preferably 40 parts by mass or less. An amount of more than 70 parts by mass may deteriorate abrasion resistance.

Reinforcing fillers conventionally and commonly used in rubber compositions for tires, such as calcium carbonate, may also be used in the present invention.

The rubber composition of the present invention may appropriately contain, in addition to the above-described components, compounding agents commonly used in the tire industry, such as silane coupling agents, wax, zinc oxide, stearic acid, mold release agents, antioxidants, vulcanizing agents, e.g. sulfur, vulcanization accelerators, and other materials.

Any type of zinc oxide may be used in the present invention, including those used in the rubber field, such as in tires. The zinc oxide may suitably be finely divided zinc oxide. Specifically, the zinc oxide preferably has an average primary particle size of 200 nm or smaller, more preferably 100 nm or smaller. The lower limit of the average primary particle size is not particularly limited but is preferably 20 nm or larger, more preferably 30 nm or larger. The average primary particle size of the zinc oxide refers to an average particle size (average primary particle size) as calculated from the specific surface area determined by the BET method based on nitrogen adsorption. The zinc oxide preferably has a specific surface area (N₂SA) of 10 to 50 m²/g as determined by the BET method based on nitrogen adsorption.

In the case of the rubber composition of the present invention containing zinc oxide, the amount of the zinc oxide per 100 parts by mass of the rubber component is preferably 0.5 to 10 parts by mass or less, more preferably 1 to 5 parts by mass. When the amount of the zinc oxide is within the range indicated above, the effects of the present invention can be more suitably achieved.

Examples of the vulcanization accelerator include sulfenamide vulcanization accelerators, thiazole vulcanization accelerators, thiuram vulcanization accelerators, and guanidine vulcanization accelerators. Among these, thiazole vulcanization accelerators and thiuram vulcanization accelerators can be suitably used in the present invention.

Examples of sulfenamide vulcanization accelerators include N-tert-butyl-2-benzothiazolylsulfenamide (TBBS), N-cyclohexyl-2-benzothiazolylsulfenamide (CBS), and N,N'-dicyclohexyl-2-benzothiazolylsulfenamide (DZ), with N-tert-butyl-2-benzothiazolylsulfenamide being preferred. Examples of thiazole vulcanization accelerators include 2-mercaptobenzothiazole, cyclohexylamine salts of 2-mercaptobenzothiazole, and di-2-benzothiazolyl disulfide, with di-2-benzothiazolyl disulfide being preferred. Examples of thiuram vulcanization accelerators include tetramethylthiuram disulfide (TMTD), tetrabenzylthiuram disulfide (TBzTD), and tetrakis(2-ethylhexyl)thiuram disulfide (TOT-N), with TOT-N being preferred. Examples of guanidine vulcanization accelerators include diphenylguanidine, diorthotolylguanidine, and triphenylguanidine, with diphenylguanidine being preferred.

In the case of the rubber composition of the present invention containing a vulcanization accelerator, the amount of the vulcanization accelerator per 100 parts by mass of the rubber component is preferably 1 part by mass or more, more preferably 3 parts by mass or more, but preferably 15 parts by mass or less, more preferably 10 parts by mass or less. Less than 1 part by mass of the vulcanization accelerator tends not to provide a sufficient cure rate, with the result that good grip performance or abrasion resistance tends not to be obtained. More than 15 parts by mass of the vulcanization accelerator may cause blooming, resulting in a decrease in grip performance or abrasion resistance.

The rubber composition of the present invention can be prepared by conventional methods.

For example, first, components excluding sulfur and vulcanization accelerators are compounded (added) and kneaded in a rubber kneading machine such as a Banbury mixer or open roll mill to obtain a kneadate (base kneading step). Subsequently, the sulfur and vulcanization accelerators are further compounded with (or added to) the kneadate and kneaded, followed by vulcanization, whereby the rubber composition can be prepared.

The rubber composition of the present invention can be used for applications requiring grip force, i.e. tires, rubber soles, industrial belts, butyl frame rubber, packing materials, seismic isolation rubber, medical stoppers and the like, and is suitable especially for rubber soles, industrial belts, and treads of pneumatic tires, and particularly for cap treads for high performance tires.

The pneumatic tire of the present invention can be formed from the above-described rubber composition by usual methods.

Specifically, the rubber composition incorporating the components described above, before vulcanization, is extruded and processed into the shape of a tread and then assembled with other tire components on a tire building machine in a usual manner to build an unvulcanized tire. The unvulcanized tire is heat-pressed in a vulcanizer to obtain a tire.

The pneumatic tire of the present invention can be used in, for example, passenger vehicles, trucks and buses, sports cars, motor bicycles, and racing vehicles, and is suitable especially as a high performance tire. In the present invention, the term "high performance tire" refers to a tire that is excellent especially in grip performance, particularly dry grip performance, and conceptually includes racing tires intended to be used in racing vehicles. The racing tire can be suitably used as a racing tire for races and the like, and especially as a dry racing tire to be used on the dry road surface.

### EXAMPLES

The present invention is specifically described with reference to, but not limited to, examples below.

### <Preparation of chain end modifier>

A 100 mL measuring flask in a nitrogen atmosphere was charged with 23.6 g of 3-(N,N-dimethylamino)propyltrimethoxysilane (available from AZmax. Co.) and then with anhydrous hexane (available from Kanto Chemical Co., Inc.) to give a total amount of 100 mL, whereby a chain end modifier was prepared.

### <Copolymer preparation 1>

A sufficiently nitrogen-purged 30 L pressure-resistant vessel was charged with 18 L of n-hexane, 740 g of styrene (available from Kanto Chemical Co. , Inc.), 1, 260 g of butadiene, and 10 mmol of tetramethylethylenediamine, and then the temperature was raised to 40°C. Next, 10 mL of butyllithium was added to the mixture, and then the temperature was raised to 50°C, followed by stirring for three hours. Subsequently, 11 mL of the chain end modifier was added to the resulting mixture, followed by stirring for 30 minutes. After 15 mL of methanol and 0.1 g of 2, 6-tert-butyl-p-cresol were added to the reaction mixture, the reaction mixture was put in a stainless steel vessel containing 18 L of methanol, and then aggregates were collected. The aggregates were dried under reduced pressure for 24 hours to obtain a modified SBR.

The chemicals used in examples and comparative examples were listed below.
<SBR 1>: Tufdene 4850 available from Asahi Kasei Corporation (styrene content: 40% by mass, vinyl content: 46% by mass, Mw: 1, 190, 000, Tg: -27°C, oil content per 100 parts by mass of rubber solids: 50 parts by mass)
<SBR 2>: modified SBR prepared in Copolymer preparation 1 (styrene content: 27% by mass, vinyl content: 58% by mass, Mw: 720,000, Tg: -27°C)
<BR>: CB24 available from Lanxess (high-cis BR synthesized using a Nd catalyst)
<NR>: TSR20
<Silica>: ULTRASIL VN3 available from Evonik (N₂SA: 175 m²/g)
<Carbon black>: HP180 available from Orion Engineered Carbons (N₂SA: 175 m²/g, CTAB specific surface area: 181 m²/g)
<Silane coupling agent>: Si75 (bis(3-triethoxysilylpropyl)disulfide) available from Evonik
<Inorganic filler 1>: a dry ground product of ATH#B available from Sumitomo Chemical Co., Ltd. (aluminum hydroxide, average particle size: 0.5 µm, N₂SA: 95 m²/g, Mohs hardness: 3, Mohs hardness of its pyrolysate (alumina) : 9, thermal decomposition onset temperature: 200°C)
<Inorganic filler 2>: ATH#B available from Sumitomo Chemical Co., Ltd. (aluminum hydroxide, average particle size: 0.6 µm, N₂SA: 15 m²/g, Mohs hardness: 3, Mohs hardness of its pyrolysate (alumina): 9, thermal decomposition onset temperature: 200°C)
<Inorganic filler 3>: HIGILITE H-43 available from Showa Denko K. K. (aluminum hydroxide, average particle size: 0.75 µm, N₂SA: 6.7 m²/g, Mohs hardness: 3, Mohs hardness of its pyrolysate (alumina): 9, thermal decomposition onset temperature: 200°C)
<Liquid diene polymer>: L-SBR-820 available from Kuraray Co., Ltd. (liquid SBR, Mw: 10,000)
<Additive 1>: bisphenol A diglycidyl ether available from Tokyo Chemical Industry Co., Ltd. (a compound of formula (1) wherein R¹ and R² are methyl groups, R³ is a methylene group, and R⁴ is an oxirane group, as represented by the following formula) 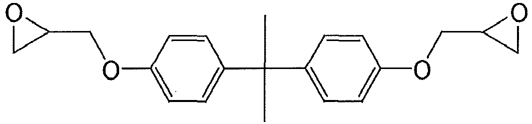
<Additive 2>: bisphenol A available from Tokyo Chemical Industry Co., Ltd. (a compound represented by the following formula) 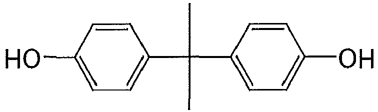
<Additive 3>: bisphenol A diacetate available from Tokyo Chemical Industry Co., Ltd. (a compound represented by the following formula) 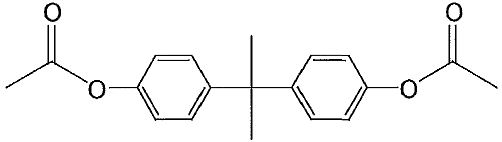
<Additive 4>: bisphenol A O,O-diacetate available from Tokyo Chemical Industry Co., Ltd. (a compound represented by the following formula) 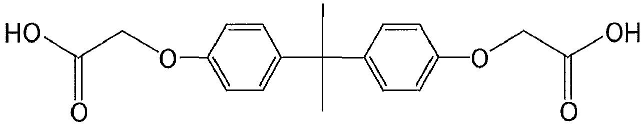
<Additive 5>: 1,4-butanediol diglycidyl ether available from Tokyo Chemical Industry Co., Ltd. (a compound represented by the following formula) 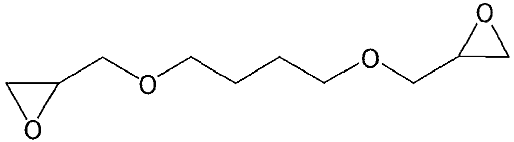
<Oil>: Diana Process AH-24 available from Idemitsu Kosan Co., Ltd.
<Acrylic resin (1)-1>: ARUFON UC-3900 available from Toagosei Co., Ltd. (solvent-free styrene acrylic resin containing a carboxyl group, purity: 98% by mass or more, Tg: 60°C, acid value: 108 mg KOH/g, Mw: 4, 600, N₂SA: 0 m²/g, softening point: 80°C)
<Acrylic resin (1) -2>: a dry ground product of ARUFON UC-3900 available from Toagosei Co., Ltd. (solvent-free styrene acrylic resin containing a carboxyl group, purity: 98% by mass or more, Tg: 60°C, acid value: 108 mg KOH/g, Mw: 4,600, N₂SA: 4.0 m²/g, softening point: 80°C)
<Acrylic resin (2) -1>: ARUFON UH-2170 available from Toagosei Co., Ltd. (solvent-free styrene acrylic resin containing a hydroxy group, purity: 98% by mass or more, Tg: 60°C, OH value: 88 mg KOH/g, Mw: 14,000, N₂SA: 0 m²/g, softening point: 80°C)
<Acrylic resin (2)-2>: a dry ground product of ARUFON UH-2170 available from Toagosei Co. , Ltd. (solvent-free styrene acrylic resin containing a hydroxy group, purity: 98% by mass or more, Tg: 60°C, OH value: 88 mg KOH/g, Mw: 14,000, N₂SA: 4.0 m²/g, softening point: 80°C)
<Acrylic resin (3)-1>: ARUFON UC-3920 available from Toagosei Co., Ltd. (solvent-free styrene acrylic resin containing a carboxyl group, purity: 98% by mass or more, Tg: 102°C, acid value: 240 mg KOH/g, Mw: 15, 500, N₂SA: 0 m²/g, softening point: 125°C)
<Acrylic resin (3) -2>: a dry ground product of ARUFON UC-3920 available from Toagosei Co. , Ltd. (solvent-free styrene acrylic resin containing a carboxyl group, purity: 98% by mass or more, Tg: 102°C, acid value: 240 mg KOH/g, Mw: 15, 500, N₂SA: 4.0 m²/g, softening point: 125°C)
<Acrylic resin (4) >: ARUFON UC-3000 available from Toagosei Co. , Ltd. (solvent-free all-acrylic resin containing a carboxyl group, purity: 98% by mass or more, Tg: 65°C, acid value: 74 mg KOH/g, Mw: 10,000, N₂SA: 4.0 m²/g, softening point: 85°C)
<Aromatic terpene resin>: YS resin TO125 available from Yasuhara Chemical Co., Ltd. (Tg: 65°C, OH value: 0 mg KOH/g, N₂SA: 0 m²/g, softening point: 125°C)
<Terpene phenol resin>: Sylvares TP115 available from Arizona Chemical (Tg: 55°C, OH value: 50 mg KOH/g, Mw: 600, N₂SA: 0 m²/g, softening point: 115°C)
<Alkylphenolic resin>: Koresin available from BASF (p-t-butylphenol-acetylene condensation resin, Tg: 98°C, OH value: 198 mg KOH/g, N₂SA: 0 m²/g, softening point: 145°C)
<Zinc oxide 1>: ZINCOX SUPER F-2 available from HakusuiTech Co. , Ltd. (average primary particle size: 65 nm, N₂SA: 20 m²/g)
<Zinc oxide 2>: zinc oxide #2 available from Mitsui Mining & Smelting Co., Ltd.
<Antioxidant 1>: Antigene 6C (N-phenyl-N'-(1,3-dimethyl)-p-phenylenediamine) available from Sumitomo Chemical Co., Ltd.
<Antioxidant 2>: NOCRAC 224 (2,2,4-trimethyl-1,2-dihydroquinoline polymer) available from Ouchi Shinko Chemical Industrial Co., Ltd.
<Stearic acid>: stearic acid "TSUBAKI" available from NOF Corporation
<Sulfur>: HK-200-5 (5% oil-containing sulfur powder) available from Hosoi Chemical Industry Co., Ltd.
<Vulcanization accelerator 1>: NOCCELER DM (di-2-benzothiazolyl disulfide) available from Ouchi Shinko Chemical Industrial Co., Ltd.
<Vulcanization accelerator 2>: NOCCELER NS (N-tert-butyl-2-benzothiazolylsulfenamide) available from Ouchi Shinko Chemical Industrial Co., Ltd.
<Vulcanization accelerator 3>: NOCCELER D (diphenylguanidine) available from Ouchi Shinko Chemical Industrial Co., Ltd.
<Vulcanization accelerator 4>: NOCCELER TOT-N (tetrakis(2-ethylhexyl)thiuram disulfide) available from Ouchi Shinko Chemical Industrial Co., Ltd.

### <Examples and Comparative Examples>

According to the formulations shown in Tables 1 and 2, the compounding materials excluding sulfur and vulcanization accelerators 1 to 4 were kneaded with a 4.0 L Banbury mixer (available from Kobe Steel Ltd.) for five minutes at a discharge temperature of 150°C. The sulfur and vulcanization accelerators were added to the resulting kneadate and then kneaded with an open roll mill for four minutes at a discharge temperature of 95°C to obtain an unvulcanized rubber composition. The unvulcanized rubber composition was formed into the shape of a tread and then assembled with other tire components on a tire building machine, followed by vulcanization at 160°C for 20 minutes to obtain a test tire (tire size: 215/45R17).

The test tires prepared as above were evaluated on the items below. Tables 1 and 2 show the results. Comparative Example 1 was taken as a standard comparative example for Examples 1 to 17 and Comparative Examples 2 to 7; Comparative Example 8 was taken as a standard comparative example for Examples 18 to 20 and Comparative Example 9; and Comparative Example 10 was taken as a standard comparative example for Examples 21 to 23 and Comparative Example 11.

### (Initial grip performance)

The test tires were mounted on a front-engine, rear-wheel-drive car of 2000 cc displacement made in Japan. A test driver drove the car 10 laps around a test track under dry asphalt surface conditions and then evaluated the stability of steering control on the second lap. The results are expressed as an index (initial grip performance index), with the standard comparative example set equal to 100. A higher index indicates higher initial grip performance. Tires with an index of 104 or higher are considered to have particularly good initial grip performance.

### (Grip performance during mid and late running)

The test tires were mounted on a front-engine, rear-wheel-drive car of 2000 cc displacement made in Japan. A test driver drove the car 10 laps around a test track under dry asphalt surface conditions and then compared the stability of steering control on the lap with the best lap time with that on the final lap for evaluation. The results are expressed as an index, with the standard comparative example set equal to 100. A higher index indicates a smaller deterioration in grip performance on dry roads during mid and late running, which means that stable grip performance during mid and late running is well achieved. Tires with an index of 104 or higher are considered to have particularly good grip performance.

### (Abrasion resistance)

The test tires were mounted on a front-engine, rear-wheel-drive car of 2000 cc displacement made in Japan. A test driver drove the car on a test track under dry asphalt surface conditions. Then, the remaining groove depth in the tire tread rubber (initial depth: 7.0 mm) was measured and expressed as an index (abrasion resistance index), with the corresponding standard comparative example set equal to 100. A higher index indicates higher abrasion resistance. Tires with an index of 85 or higher are considered to have good abrasion resistance.

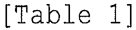

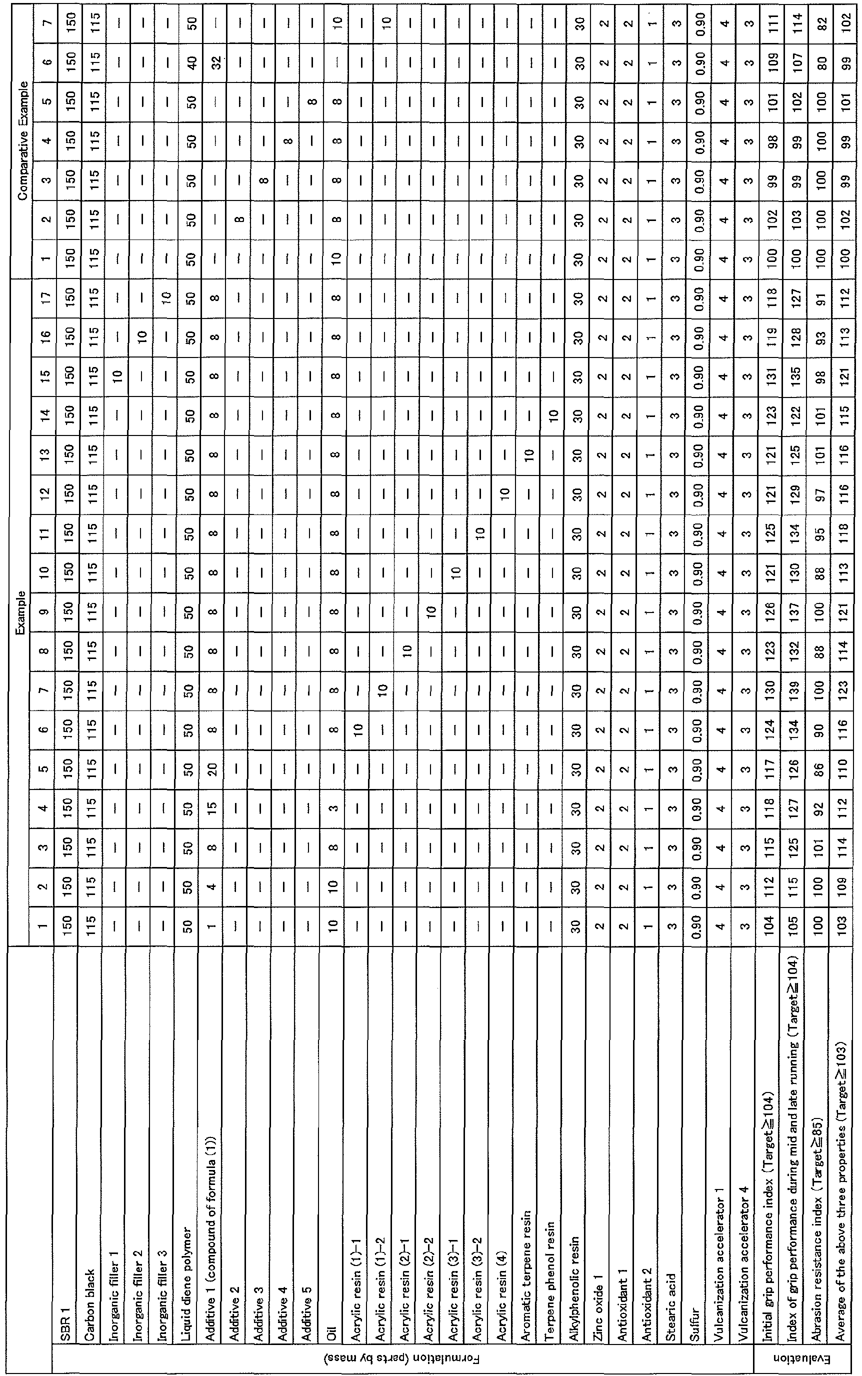

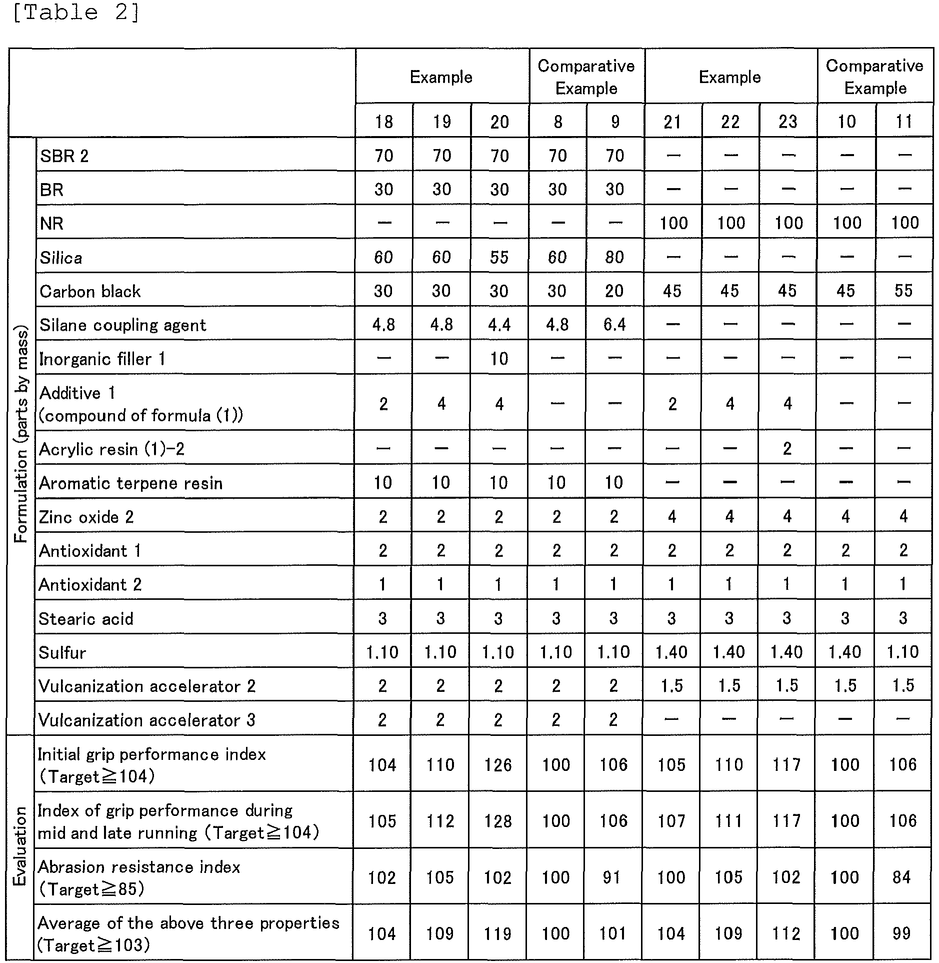

The results in Tables 1 and 2 demonstrate that, in the examples in which a specific amount of a diene rubber, sulfur, and a specific amount of a compound of formula (1) were incorporated, initial grip performance and stable grip performance during mid and late running, especially on dry roads, were simultaneously highly improved while ensuring good abrasion resistance.

Comparison particularly of Example 3 and Comparative Examples 1 and 7 with Example 7 shows that the combined use of the compound of formula (1) and an acrylic resin containing a hydroxy group and/or a carboxyl group showed synergistic effects in improving initial grip performance and abrasion resistance and in improving the average or balance of the three properties, which effects were greater than the sum of those obtained when the compound of formula (1) or the acrylic resin containing a hydroxy group and/or a carboxyl group was used alone.

## Claims

1. A rubber composition, comprising:
a rubber component;
sulfur; and
a compound represented by the formula (1) below,
the rubber component including 60% to 100% by mass of a diene rubber based on 100% by mass of the rubber component,
the compound of formula (1) being present in an amount of 0.1 to 30 parts by mass per 100 parts by mass of the rubber component, 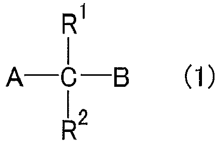 wherein R¹ and R² are the same or different and each represent a hydrogen atom or a C1-C30 monovalent hydrocarbon group; and A and B are the same or different and each represent a group represented by the following formula (2): 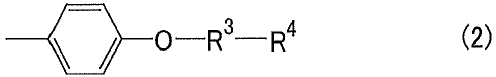 wherein R³ represents a C1-C30 divalent hydrocarbon group; and R⁴ represents a cyclic ether group.

2. The rubber composition according to claim 1,
wherein the rubber composition comprises:
at least one of carbon black or silica; and
a styrene butadiene rubber having a styrene content of 19% to 60% by mass,
the styrene butadiene rubber is present in an amount of 10% to 100% by mass based on 100% by mass of the rubber component, and
the at least one of carbon black or silica is present in a combined amount of 30 to 150 parts by mass per 100 parts by mass of the rubber component.

3. The rubber composition according to claim 1 or 2,
wherein the rubber composition comprises an acrylic resin containing at least one of a carboxyl group or a hydroxy group.

4. The rubber composition according to any one of claims 1 to 3,
wherein the rubber composition is used for applications requiring grip force.

5. The rubber composition according to any one of claims 1 to 3,
wherein the rubber composition is a rubber composition for rubber soles.

6. The rubber composition according to any one of claims 1 to 3,
wherein the rubber composition is a rubber composition for industrial belts.

7. The rubber composition according to any one of claims 1 to 3,
wherein the rubber composition is a rubber composition for tire treads.

8. A pneumatic tire, comprising a tread formed from the rubber composition according to any one of claims 1 to 3.

## Amended claims

### Amended claims under Art. 19.1 PCT

1. (Amended) A rubber composition, comprising:
a rubber component;
sulfur;
a compound represented by the formula (1) below; and
at least one of carbon black or silica,
the rubber component including 60% to 100% by mass of a diene rubber based on 100% by mass of the rubber component,
the compound of formula (1) being present in an amount of 0.1 to 30 parts by mass per 100 parts by mass of the rubber component, 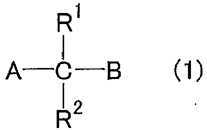 wherein Rⁱ and R² are the same or different and each represent a hydrogen atom or a C1-C30 monovalent hydrocarbon group; and A and B are the same or different and each represent a group represented by the following formula (2): 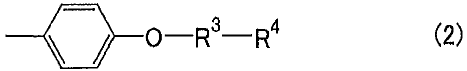 wherein R³ represents a C1-C30 divalent hydrocarbon group; and R⁴ represents a cyclic ether group.

2. (Amended) The rubber composition according to claim 1,
wherein the rubber composition comprises a styrene butadiene rubber having a styrene content of 19% to 60% by mass,
the styrene butadiene rubber is present in an amount of 10% to 100% by mass based on 100% by mass of the rubber component, and
the at least one of carbon black or silica is present in a combined amount of 30 to 150 parts by mass per 100 parts by mass of the rubber component.

3. The rubber composition according to claim 1 or 2,
wherein the rubber composition comprises an acrylic resin containing at least one of a carboxyl group or a hydroxy group.

4. The rubber composition according to any one of claims 1 to 3,
wherein the rubber composition is used for applications requiring grip force.

5. The rubber composition according to any one of claims 1 to 3,
wherein the rubber composition is a rubber composition for rubber soles.

6. The rubber composition according to any one of claims 1 to 3,
wherein the rubber composition is a rubber composition for industrial belts.

7. The rubber composition according to any one of claims 1 to 3,
wherein the rubber composition is a rubber composition for tire treads.

8. A pneumatic tire, comprising a tread formed from the rubber composition according to any one of claims 1 to 3.

Statement under Art. 19.1 PCT
1. has been amended to essentially comprise "at least one of carbon black or silica", which is supported by original claim 2 and paragraph [0079] of the description as filed.

2. has been amended to delete "at least one of carbon black or silica; and".
